# EUROPÄISCHE PATENTSCHRIFT

(11) **EP 2 560 126 B1**
(45) Veröffentlichungstag und Bekanntmachung des Hinweises auf die Patenterteilung: **16.03.2016**
(21) Anmeldenummer: 12180235.9
(22) Anmeldetag: 13.08.2012
(51) Int. Cl.: G06K 7/08

(54) **Anti-Skimming-Modul mit minimiertem globalen Störfeld**
Anti skimming module with minimized global interference field
Module anti-skimming avec champ de perturbation global minimisé

(30) Priorität: 19.08.2011 DE 102011052832
(43) Veröffentlichungstag der Anmeldung: 20.02.2013
(73) Patentinhaber: Wincor Nixdorf International GmbH, 33106 Paderborn (DE)
(72) Erfinder: Müller, Achim, 33719 Bielefeld (DE)

(56) Entgegenhaltungen:
- WO-A1-2010/000004
- DE-A1-102009 019 708

## Beschreibung

Die Erfindung betrifft eine Vorrichtung zum Verhindern des Ausspähens von auf einem Magnetstreifen einer Magnetstreifen- und/oder Chipkarte gespeicherten Daten, die eine Induktivität umfasst, die zum Erzeugen eines elektromagnetischen Störfeldes mit einem elektrischen Strom beaufschlagt wird.

Die Erfindung wird insbesondere bei Geldautomaten oder sonstigen Vorrichtungen, in die eine Bankkarte, eine EC-Karte und/oder eine Kreditkarte eingegeben wird, eingesetzt, um sogenannte Skimming-Angriffe zu vermeiden. Bei Skimming-Angriffen wird von Datendieben ein sogenanntes Skimming-Modul vor der eigentlichen Kartenleseeinheit des Geldautomaten angebracht, das eine eigene Kartenleseeinheit zum Auslesen der Daten des Magnetstreifens umfasst. Ferner wird durch die Datendiebe die zu der Magnetstreifen- und/oder Chipkarte gehörige PIN, beispielsweise über eine auf der eigentlichen Tastatur des Geldautomaten angeordnete zusätzliche Tastatur oder eine versteckt angebrachte Kamera, ausgespäht, so dass der Datendieb mit Hilfe der ausgelesenen Daten und der ausgespähten PIN Geld von dem zu der Magnetstreifen- und/oder Chipkarten gehörenden Konto abheben kann.

Um dies zu vermeiden ist es bekannt, eine sogenanntes Anti-Skimming-Modul zum Verhindern des Ausspähens von auf dem Magnetstreifen einer Magnetstreifen- und/oder Chipkarte gespeicherten Daten vorzusehen, das benachbart zu dem Schlitz, über den die Magnetstreifen- und/oder Chipkarte der Kartenleseeinheit des Geldautomaten zugeführt wird, angeordnet ist und das über eine Spule ein elektromagnetisches Störfeld erzeugten, durch das die Kartenleseeinheit eines Skimming-Moduls derart gestört wird, dass mit Hilfe des Störfeldes die Daten des Magnetstreifens nicht ausgespäht werden können. Ein solches Anti-Skimming-Modul ist beispielsweise aus dem Dokument DE 10 2005 043 317 B3 bekannt.

Ein Anti-Skimming-Modul mit zwei Spulen zum Erzeugen eines elektromagnetischen Störfeldes ist bekannt aus dem Dokument DE 10 2009 019708 A1, welches die Basis für den Oberbegriff des Anspruchs 1 bildet.

Problematisch an bekannten Anti-Skimming-Modulen ist es, dass zum sicheren Verhindern des Ausspähens ein relatives starkes Störfeld erzeugt werden muss, welches unter Umständen so stark ist, dass Herzschrittmacher von den Geldautomaten bedienenden Bedienpersonen durch das Störfeld beeinträchtigt werden können.

Es ist Aufgabe der Erfindung, eine Vorrichtung zum Verhindern des Ausspähens von von einem Magnetstreifen einer Magnetstreifen- und/oder Chipkarte gespeicherten Daten anzugeben, mit deren Hilfe das Ausspähen der Daten zuverlässig verhindert wird und bei der die elektromagnetische Belastung einer Bedienperson möglichst gering ist.

Diese Aufgabe wird durch eine Vorrichtung mit den Merkmalen des Anspruchs 1 gelöst. Vorteilhafte Weiterbildungen der Erfindung sind in den abhängigen Ansprüchen angegeben. Erfindungsgemäß umfasst die Vorrichtung eine zweite Induktivität, die zum Erzeugen eines elektromagnetischen zweiten Störfeldes mit einem zweiten elektrischen Strom beaufschlagt wird.

Hierdurch wird erreicht, dass im Nahbereich ein starkes Störfeld ausgebildet ist, durch das das Ausspähen der Daten über ein Skimming-Modul zuverlässig verhindert wird, im Fernbereich dagegen die beiden Störfelder sich zumindest teilweise kompensieren und somit die Stärke des resultierenden Störfeldes im Fernbereich reduziert wird, so dass die Belastung für eine im Fernbereich stehende Bedienperson ebenfalls reduziert wird. Insbesondere wird die Stärke des resultierenden Störfeldes derart minimiert, dass diese nicht mehr in einem für Herzschrittmacher kritischen Bereich liegt.

Unter dem Nahbereich wird insbesondere derjenige Bereich verstanden, der in einem Abstand von maximal 6 cm zu dem Schlitz, durch den die Magnetstreifen- und/oder Chipkarte einer Kartenleseeinheit zugeführt wird, angeordnet ist. Der Fernbereich dagegen ist derjenige Bereich, der in einem Abstand von 20cm bis 50 cm zu den Induktivitäten angeordnet ist. In diesem Fernbereich spielt der Abstand zwischen den beiden Induktivitäten für das resultierende Störfeld nur eine geringe Rolle, so dass beide Induktivitäten sich nahezu überlagern. Bei einer optimalen Überlagerung der beiden Induktivitäten, d.h. wenn die beiden Induktivitäten am gleichen Ort angeordnet wären und gegenphasig mit den Wechselströmen beaufschlagt wären, würde eine vollständige Kompensation der beiden Störfelder erfolgen, so dass sich überhaupt kein resultierendes Störfeld mehr ergeben würde. Durch den tatsächlich vorhandenen, aber im Vergleich zu der Entfernung im Fernbereich relativ geringen Abstand zwischen den beiden Induktivitäten bleibt zwar ein resultierendes Störfeld im Fernbereich erhalten, das aber wesentlich geringer ist, als wenn nur eine Induktivität vorgesehen wäre und/oder als wenn die beiden Induktivitäten mit einem gleichphasigen Wechselstrom beaufschlagt wären.

Die Induktivitäten sind derart angeordnet und/oder derart mit dem jeweiligen Strom beaufschlagt, dass das aus dem ersten und dem zweiten Störfeld resultierende Störfeld in einem Zwischenbereich zwischen den beiden Induktivitäten eine größere Feldstärke als die beiden einzelnen Störfelder für sich allein gesehen hat und dass das resultierende Störfeld außerhalb dieses Zwischenbereichs eine geringere Feldstärke als die beiden einzelnen Störfelder aufweist. Hierdurch wird erreicht, dass in dem Zwischenbereich eine besonders hohe Feldstärke erzielt wird, sodass ein in diesem Bereich angeordnetes Skimmingmodul gestört würde und somit die Daten des Magnetstreifens der Magnetstreifen- und/oder Chipkarten nicht gelesen werden können. Durch die gegenseitige Abschwächung der beiden Störfelder außerhalb dieses Zwischenbereiches wird aber erreicht, dass in diesem Bereich nur eine geringe Feldstärke resultiert, sodass z. B. Herzschrittmacher nicht davon beeinflusst werden können.

Die beiden Induktivitäten sind insbesondere derart angeordnet, dass der Zwischenbereich denjenigen Bereich umfasst, in dem üblicherweise ein Skimmingmodul angeordnet werden muss, um hiermit die Daten ausspähen zu können. Die beiden Induktivitäten sind hierzu insbesondere an zwei entgegengesetzten Seiten eines Schlitzes zum Einführen der Magnetstreifen- und/oder Chipkarten in die Vorrichtung angeordnet, sodass der Zwischenbereich diesen Bereich des Schlitzes umfasst.

Bei einer besonders bevorzugten Ausführungsform überlagern sich das erste Störfeld und das zweite Störfeld zwischen den beiden Induktivitäten gleichphasig und außerhalb der beiden Induktivitäten gegenphasig, sodass die resultierende Feldstärke zwischen den beiden Induktivitäten der Summe der Beträge der Feldstärke der beiden einzelnen Störfelder entspricht und außerhalb des Zwischenbereiches sich eine besonders geringe Feldstärke ergibt oder optimaler Weise sich die beiden Störfelder gegenseitig aufheben, sodass überhaupt kein resultierendes Feld außerhalb des Zwischenbereichs vorliegt.

Die erste Induktivität und die zweite Induktivität können insbesondere gleichphasig angesteuert sein. Bei einer alternativen Ausführungsform können die beiden Induktivitäten auch gegenphasig angesteuert sein, wobei je nach Ansteuerung der Induktivitäten der Abstand zwischen den beiden Induktivitäten entsprechend anzupassen ist, um somit das zuvor beschriebene resultierende Störfeld, das zwischen den beiden Induktivitäten besonders stark und außerhalb nur sehr schwach ausgebildet ist, zu erreichen.

Die erste Induktivität und die zweite Induktivität sind insbesondere derart ausgebildet, dass die elektromagnetischen Wellen des ersten Störfeldes und die elektromagnetischen Wellen des zweiten Störfeldes die gleiche Amplitude und/oder die gleiche Frequenz haben. Hierdurch wird erreicht, dass zumindest im Fernbereich durch die Gegenphasigkeit der Störfelder und die gleiche Amplitude und die gleiche Frequenz eine weitestgehende Kompensation der beiden Störfelder erfolgt, so dass sich hierdurch nur ein geringes resultierendes Störfeld in dem Fernbereich ergibt.

Die erste Induktivität und die zweite Induktivität sind insbesondere baugleich, so dass sie dieselben elektrischen Parameter aufweisen und somit die Amplitude und Frequenz der von ihnen ausgesandten elektromagnetischen Wellen beim Durchströmen mit einem gleichen Strom identisch sind.

Die erste Induktivität umfasst insbesondere eine erste Spule und die zweite Induktivität insbesondere eine zweite Spule. Somit ist ein besonders einfacher, platzsparender und kostengünstiger Aufbau der Induktivitäten erreicht. Die erste und die zweite Spule sind insbesondere baugleich.

Die erste Induktivität und die zweite Induktivität sind insbesondere in einem Abstand zwischen 1 cm und 4 cm, vorzugsweise zwischen 2 cm und 3 cm, zueinander angeordnet. Die Vorrichtung umfasst insbesondere einen Schlitz zum Durchführen der Magnetstreifen- und/oder Chipkarte, wobei die erste Induktivität vorzugsweise an einer ersten Seite des Schlitzes und die zweite Induktivität vorzugsweise an einer zweiten Seite des Schlitzes, die der ersten Seite gegenüberliegend ist, angeordnet sind. Die erste Induktivität ist insbesondere derart angeordnet, dass sie sich in den Bereich des Magnetstreifens befindet, wenn die Magnetstreifen- und/oder Chipkarte in einer ersten Ausrichtung in dem Schlitz eingeführt wird. Die zweite Induktivität ist insbesondere derart angeordnet, dass sie im Bereich des Magnetstreifens angeordnet ist, wenn die Magnetstreifen- und/oder Chipkarte in einer zweiten Ausrichtung angeordnet ist, wobei die Magnetstreifen und/oder Chipkarte zwischen der ersten und der zweiten Ausrichtung um 180° gewendet ist. Bei der ersten Ausrichtung wird die Magnetstreifen- und/oder Chipkarte insbesondere mit nach oben gerichteten Magnetstreifen in den Schlitz eingeführt, bei der zweiten Ausrichtung entsprechend mit nach unten gerichteten Magnetstreifen. Somit wird durch die Anordnung der Induktivitäten erreicht, dass diese möglichst nah an dem Magnetstreifen und somit auch möglichst nah an der Kartenleseeinheit eines eventuellen vor dem Schlitz angebrachten Skimming-Moduls angeordnet sind und daher im Bereich der Kartenleseeinheit des Skimming-Moduls ein starkes Störfeld durch die jeweilige Spule erzeugt wird.

Bei einer alternativen Ausführungsform der Erfindung kann die erste Spule auch um den Schlitz herumgewickelt angeordnet sein, so dass durch sie im Bereich des gesamten Schlitzes ein starkes Störfeld erzeugt wird. Die zweite Spule dagegen ist an einer einzelnen Stelle punktuell benachbart zum Schlitz angeordnet. Unter dieser an einer einzelnen Stelle punktuellen Anordnung wird insbesondere verstanden, dass die Spule nicht um den gesamten Schlitz herumgewickelt ist, sondern die gesamte Wicklung an einem in einem voreingestellten Abstand zu dem Schlitz angeordneten Ort vorgesehen ist.

Die erste Spule und/oder die zweite Spule sind insbesondere als gedruckte Schaltungen ausgebildet, so dass ein besonders einfacher platzsparender Aufbau erreicht ist und die Spulen auf einfache Weise montiert werden können.

Der erste und der zweite Wechselstrom sind insbesondere gegenphasig. Die Gegenphasigkeit des ersten und des zweiten Stromes wird vorzugsweise dadurch erreicht, dass der erste und der zweite Strom die entgegengesetzte Flussrichtung haben. Ferner sind der erste Strom und der zweite Strom insbesondere derart gewählt, dass sie die gleiche Stromstärke haben, so dass die durch die erste Induktivität und die durch die zweite Induktivität erzeugten elektromagnetischen Wellen bei baugleichen Induktivitäten auch die gleiche Frequenz und Amplitude aufweisen und somit eine zuverlässige Verringerung der resultierenden Störfeldes in dem Fernbereich erfolgt.

Bei einer bevorzugten Ausführungsform der Erfindung ist mindestens eine zum Erzeugen eines elektromagnetischen dritten Störfeldes mit einem dritten elektrischen Strom beaufschlagte dritte Induktivität vorgesehen, wobei die erste, zweite und dritte Induktivität derart angeordnet sind, dass sich die Störfelder in einem Störbereich zum Stören des Ausspähens der Daten verstärken und außerhalb des Störbereichs abschwächen. Der Störbereich ist insbesondere derjenige Bereich, der zwischen den Induktivitäten angeordnet ist und in dem ein Skimming-Modul angebracht werden muss, um mit ihm die Daten ausspähen zu können.

Bei einer weiteren alternativen Ausführungsform können auch mehr als drei Induktivitäten vorgesehen sein, wobei diese derart angeordnet und/oder mit den jeweiligen elektrischen Strömen beaufschlagt sind, dass sich in den Störbereich ein starkes resultierendes Störfeld und außerhalb des Störbereichs nur ein geringes resultierendes Störfeld aufgrund der Überlagerung der einzelnen Störfelder ergibt.

Ein weiterer Aspekt der Erfindung betrifft eine Vorrichtung zur Handhabung von Wertscheinen, die eine Kartenleseeinheit zum Lesen einer Magnetstreifen- oder Chipkarte, einen Schlitz zum Zuführen der Magnetstreifen- oder Chipkarte zu der Kartenleseeinheit sowie eine Vorrichtung zum Verhindern des Ausspähens von dem Magnetstreifen einer Magnetstreifen- und/oder Chipkarte gespeicherten Daten der zuvor beschriebenen Art umfasst. Bei der Vorrichtung zur Handhabung von Wertscheinen handelt es sich insbesondere um einen Geldautomaten.

Weitere Merkmale und Vorteile der Erfindung ergeben sich aus der folgenden Beschreibung, die die Erfindung anhand von Ausführungsbeispielen im Zusammenhang mit den beigefügten Figuren näher erläutert.

Es zeigen:
- Fig. 1: eine schematische Darstellung einer Vorrichtung zur Handhabung von Wertscheinen;
- Fig. 2: eine schematische Darstellung einer Vorrichtung zum Verhindern des Ausspähens von auf einem Magnetstreifen einer Magnetstreifen- und/oder Chipkarte gespeicherten Daten gemäß einer ersten Ausführungsform und der Magnetstreifen- und/oder Chipkarte;
- Fig. 3: eine schematische Darstellung der Schaltung der Spulen der Vorrichtung nach Fig. 2 gemäß einer ersten Ausführungsform;
- Fig. 4: eine schematische Darstellung der Schaltung der beiden Spulen der Vorrichtung nach Fig. 2 gemäß einer zweiten Ausführungsform;
- Fig. 5: eine weitere schematische Darstellung der Vorrichtung nach Fig. 2;
- Fig. 6: eine schematische Darstellung des Störpegels des resultierenden Störfeldes an unterschiedlichen Positionen in Abhängigkeit des Abstands zu der Vorrichtung nach Fig. 5;
- Fig. 7: eine schematische Darstellung einer Vorrichtung zum Verhindern des Ausspähens von auf dem Magnetstreifen einer Magnetstreifen- und/oder Chipkarte gespeicherten Daten gemäß einer zweiten Ausführungsform; und
- Fig. 8: eine schematische Darstellung eines Ausschnitts eines Geldautomaten mit einer Vorrichtung zum Verhindern des Ausspähens von auf dem Magnetstreifen einer Magnetstreifen- und/oder Chipkarte gespeicherten Daten gemäß einer dritten Ausführungsform.

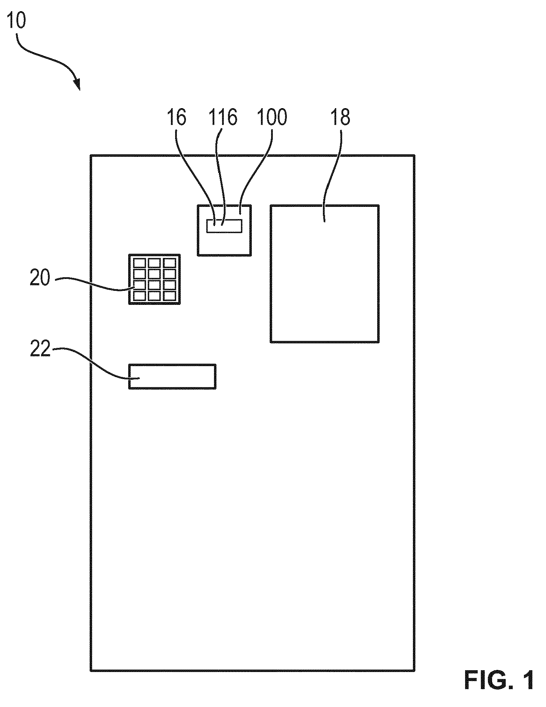

In Figur 1 ist eine schematische Darstellung einer als Geldautomat 10 ausgebildeten Vorrichtung zur Handhabung von Wertscheinen gezeigt. Alternativ kann es sich bei der Vorrichtung zur Handhabung von Wertscheinen auch um ein automatisches Kassensystem, eine automatische Tresorkasse und/oder ein Bezahlterminal zum Bezahlen mit Magnetstreifen- und/oder Chipkarten handeln.

Der Geldautomat 10 weist einen Schlitz 16 auf, durch den die Magnetstreifen- und/oder Chipkarte 12, die einen Magnetstreifen 14 aufweist, einer nicht dargestellten Kartenleseeinheit des Geldautomaten 10 zuführbar ist, die die auf dem Magnetstreifen 14 gespeicherten Daten ausliest. Bei der Magnetstreifen- und/oder Chipkarte 12 handelt es sich insbesondere um eine EC-Karte, eine Bankkarte und/oder eine Kreditkarte. Die auf dem Magnetstreifen 14 gespeicherten Daten umfassen insbesondere die Kontonummer und die Bankleitzahl des zu der Magnetstreifen- und/oder Chipkarte 12 zugeordneten Kontos.

Ferner hat der Geldautomat 10 eine Anzeigeeinheit 18, eine Tastatur 20 und ein Ausgabefach 22. Über die Anzeigeeinheit 18 können an die Bedienperson des Geldautomaten 10 Informationen ausgegeben werden und ggf., insbesondere wenn es sich bei der Anzeigeeinheit 18 um einen Touchscreen handelt, auch Informationen eingegeben werden. Die Tastatur 20 dient zur Eingabe der zu der Magnetstreifen- und/oder Chipkarte 12 gehörenden PIN, so dass sich die Bedienperson autorisieren kann. Bei einer alternativen Ausführungsform der Erfindung kann der Geldautomat 10 auch keine Tastatur 20 umfassen, sondern eine virtuelle Tastatur kann über die Anzeigeeinheit 18 angezeigt werden. Über das Ausgabefach 22 wird das von der Bedienperson angeforderte Geld ausgegeben.

Um unrechtmäßig Geld von fremden Konten abzuheben, werden von Betrügern vor dem Schlitz 16 sogenannte Skimming-Module angebracht, die eine eigene Kartenleseeinheit zum Auslesen des Magnetstreifens 14 einer Magnetstreifen- und/oder Chipkarte 12 umfassen, die beim Einführen der Magnetstreifen- und/oder Chipkarte 12 in den Geldautomaten 10 die auf dem Magnetstreifen 14 gespeicherten Daten auslesen sollen. Ferner spähen die Betrüger, beispielsweise über versteckt angebrachte Kameras, die Eingabe der PIN über die Tastatur 20 aus, so dass sie anschließend sowohl über die Kontodaten als auch die PIN verfügen und somit unberechtigt Geld von dem zu der Magnetstreifen- und/oder Chipkarte 12 zugeordneten Konto abheben können.

Um solchen Skimming-Angriffen vorzubeugen, ist eine Vorrichtung 100 zum Verhindern des Ausspähens der auf dem Magnetstreifen 14 der Magnetstreifen- und/oder Chipkarte 12 gespeicherten Daten vorgesehen, die im Folgenden auch als Anti-Skimming-Modul 100 bezeichnet wird. Das Anti-Skimming-Modul 100 ist benachbart zu dem Schlitz 16 angeordnet und weist einen Schlitz 116 auf, der derart angeordnet ist, dass die Magnetstreifen- und/oder Chipkarte durch ihn hindurch der Kartenleseeinheit des Geldautomaten 10 zuführbar ist.

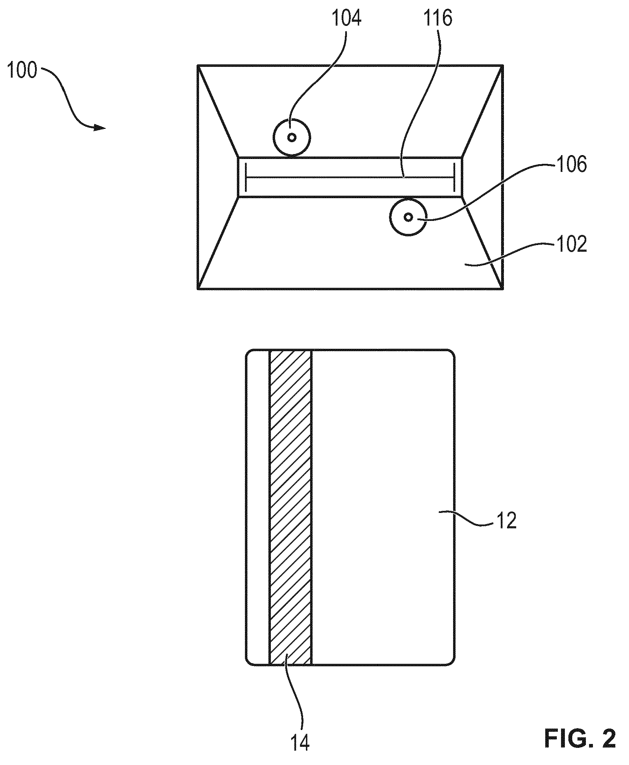

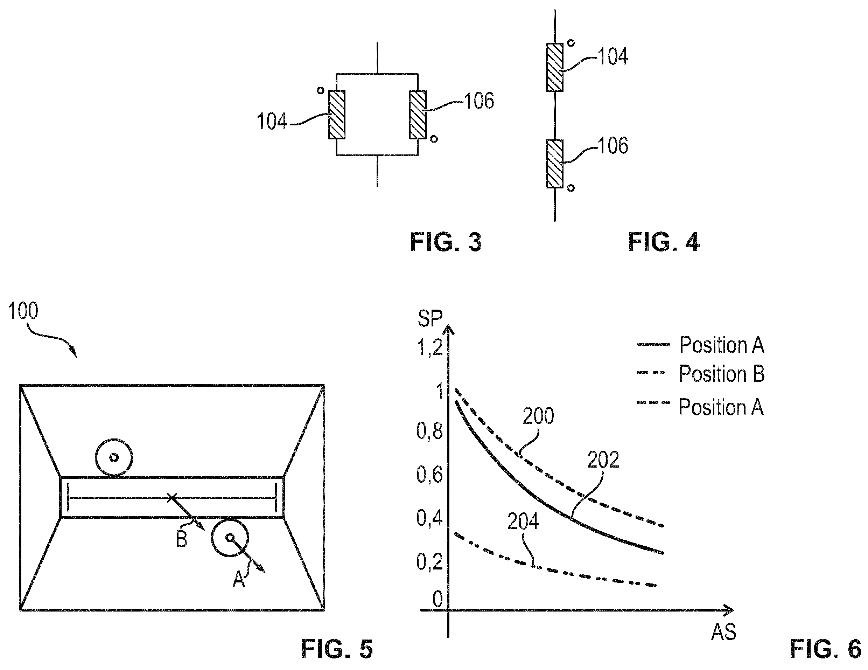

In Figur 2 ist eine schematische Darstellung des Anti-Skimming-Moduls 100 gemäß einer ersten Ausführungsform gezeigt. Das Anti-Skimming-Modul 100 weist ein Gehäuse 102 sowie zwei Spulen 104 und 106 auf. Die beiden Spulen 104, 106 können, wie in Figur 3 gezeigt, parallel geschaltet oder, wie in Figur 4 gezeigt, in Reihe geschaltet sein.

Die erste Spule 104 wird zum Erzeugen eines ersten elektromagnetischen Störfeldes mit einem ersten Wechselstrom beaufschlagt und die zweite Spule 106 zum Erzeugen eines zweiten elektromagnetischen Störfeldes entsprechend mit einem zweiten Wechselstrom. Die Spulen 102, 104 sind derart geschaltet, dass sie gegenphasig angesteuert sind. Hierzu sind die beiden Spulen 104, 106 insbesondere entgegengesetzt gewickelt.

Durch die von den Spulen 104, 106 erzeugten Störfelder wird die Kartenleseeinheit eventuell vor dem Schlitz 116 angeordneten Skimming-Moduls derart gestört, dass mit ihrer Hilfe beim Einführen der Magnetstreifen- und/oder Chipkarte 12 nicht die Daten des Magnetstreifens 14 ausgelesen werden können.

Durch das Vorsehen von zwei Spulen 104, 106 und deren gegenphasige Ansteuerung wird erreicht, dass sich die beiden durch die Spulen 104, 106 erzeugten Störfelder mit zunehmenden Abstand zu den Spulen 104, 106 zunehmend immer weiter aufheben und somit das resultierende Störfeld nur eine verhältnismäßig geringe Feldstärke hat. Somit wird insbesondere erreicht, dass in dem Abstand, in dem die Bedienperson des Geldautomaten 10 vor diesem angeordnet ist, nur ein relativ geringes Störfeld herrscht und somit die Belastung der Bedienperson gering ist. Insbesondere ist dieses Störfeld so gering, dass Herzschrittmacher durch es nicht beeinflusst werden.

Im Nahbereich jedoch, d.h. in dem Bereich, in dem die Kartenleseeinheit eines eventuell angebrachten Skimming-Moduls angeordnet wäre, steht das Störfeld in nahezu vollständiger Feldstärke zur Verfügung, d.h. dass in diesem Bereich sich die beiden Störfelder nicht oder nur geringfügig gegenseitig aufheben. Somit wird, trotz der gegenseitigen Kompensation der Störfelder im Fernbereich, im Nahbereich eine zuverlässige Störung von Skimming-Modulen und somit ein zuverlässiges Verhindern des Ausspähens der Daten des Magnetstreifens 14 erreicht.

Die beiden Spulen 14, 16 weisen insbesondere die gleichen elektrischen Parameter auf, so dass durch sie zwei gleiche elektromagnetische Felder erzeugt werden, die sich im Fernbereich entsprechend aufheben. Die beiden Spulen 104, 106 sind hierzu insbesondere baugleich.

Bei einer alternativen Ausführungsform der Erfindung können anstelle von Spulen 104, 106 auch andere Induktivitäten verwendet werden.

Bei dem in Figur 2 gezeigten ersten Ausführungsbeispiel ist die erste Spule 104 derart angeordnet, dass der Magnetstreifen 14 der Magnetstreifen- und/oder Chipkarte 12 beim Einführen in den Schlitz 116 möglichst nah an ihr vorbeigeführt werden würde, sofern die Magnetstreifen- und/oder Chipkarte 12 mit, wie in Figur 2 gezeigten, nach oben gerichtet Magnetstreifen 14 eingeführt wird. Somit ist die Spule 104 auch möglichst nah zu der Kartenleseeinheit eines eventuell angebrachten Skimming-Moduls angeordnet, so dass ein möglichst starkes Störfeld im Bereich dieser Kartenleseeinheit erzeugt wird.

Die zweite Spule 106 ist entsprechend derart angeordnet, dass der Magnetstreifen 14 möglichst nah an ihr vorbeigeführt würde, wenn die Magnetstreifen- und/oder Chipkarte 12 um 180° gedreht, d.h. mit nach unten gerichtetem Magnetstreifen 14, durch den Schlitz 116 hindurch geführt würde.

Der Abstand zwischen den beiden Spulen 104, 106 hat insbesondere einen Wert zwischen 2 cm und 3 cm, wobei unter dem Abstand insbesondere der Abstand der Mittelpunkte der beiden Spulen 104, 106 verstanden wird.

In Figur 5 ist eine weitere schematische Darstellung des Anti-Skimming-Moduls 100 gezeigt, wobei eine erste Position, die dem Mittelpunkt der zweiten Spule 106 entspricht, mit den Bezugszeichen A und eine zweite Position, die dem Mittelpunkt des Schlitzes 116 entspricht, mit dem Bezugszeichen B bezeichnet sind.

In Figur 6 ist ein experimentell ermitteltes Diagramm dargestellt, welches den Störpegel, d.h die Stärke des resultierenden Störfeldes, in Abhängigkeit des Abstandes von dem Anti-Skimming-Modul 100 in den Positionen A bzw. B darstellt, wobei der Abstand jeweils in eine parallel zu der Karteneinführebene gerichtete Richtung gemessen ist, also orthogonal auf der Papierebene nach Figur 5 steht.

Auf der X-Achse des Diagramms ist der Abstand AS aufgetragen, wohingegen auf der Y-Achse der Störpegel SP aufgetragen ist, wobei ein Störpegel SP von 1 dem maximalen Störpegel SP entspricht, der sich ergeben würde, wenn die beiden Spulen 104, 106 nicht gegenphasig, sondern gleichphasig angesteuert werden würden. Die Strichlinie 200 gibt den Störpegel SP an der Position A an, der sich bei einer gleichphasigen Ansteuerung ergeben würde. Im Bereich der zweiten Spule 106, d.h. bei einem nur geringen Abstand AS, beträgt der Störpegel SP ungefähr 1. Der Störpegel SP nimmt mit zunehmenden Abstand AS entsprechend der Strichlinie 200 ab. Die Volllinie 202 zeigt den Störpegel SP des resultierenden Störfeldes bei der erfindungsgemäßen gegenphasigen Ansteuerung der beiden Spulen 104, 106 bei der Position A. Wie dem Vergleich der Volllinie 202 und der Strichlinie 200 zu entnehmen ist, ist bei geringem Abstand AS nahezu der gleiche Störpegel SP vorhanden wie bei der gleichphasigen Ansteuerung, bei größerem Abstand AS dahingegen ist der Störpegel SP des resultierenden Störfeldes deutlich geringer als bei der gleichphasigen Ansteuerung.

Die strichpunktierte Linie 204 gibt den Störpegel SP in der Position B an, wenn die beiden Spulen 104, 106 erfindungsgemäß gegenphasig angesteuert werden. Wie dem Diagramm zu entnehmen ist, ergibt sich somit nur ein Störpegel SP der etwa 30% des Störpegels SP entspricht, der sich bei gleichphasiger Schaltung der beiden Spulen 104, 106 ergeben würde (gestrichelte Linie 200).

Somit ist die Belastung für die Bedienperson, die sich in einem größeren Abstand AS zu dem Anti-Skimming-Modul 100 befindet, durch diese gegenphasige Ansteuerung der beiden Spulen 104, 106 deutlich reduziert.

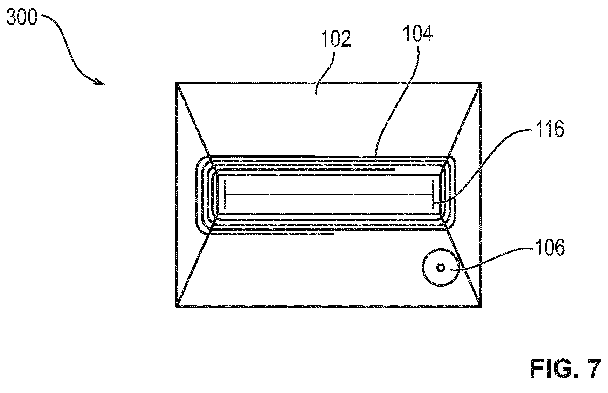

In Figur 7 ist eine schematische Darstellung eines Anti-Skimming-Moduls 300 gemäß einer zweiten Ausführungsform der Erfindung gezeigt. Bei dieser zweiten Ausführungsform ist die erste Spule 104 derart ausgebildet, dass sie umlaufend um den Schlitz 116 gewickelt ist, wohingegen die zweite Spule 106, wie auch bei dem ersten Ausführungsbeispiel nach Figur 2, punktuell benachbart angeordnet ist. Die erste Spule 104 und die zweite Spule 106 sind insbesondere als gedruckte Schaltungen ausgebildet, die in das Gehäuse 106 an der Innenseite, d.h. derjenigen Seite, die beim montierten Anti-Skimming-Modul 300 dem Geldautomaten 10 zugewandt ist, angeklebt.

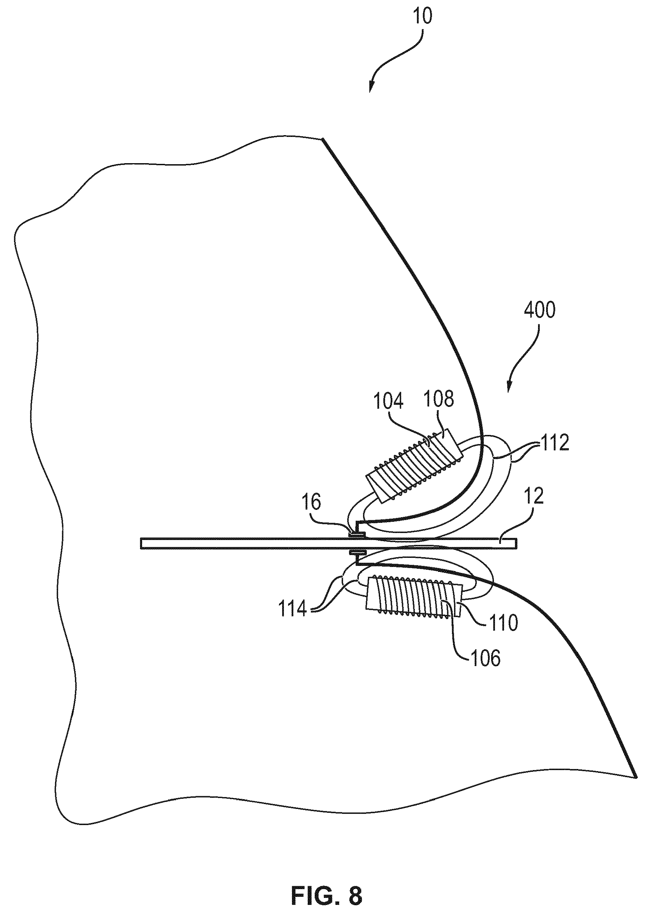

In Figur 8 ist eine schematische Darstellung eines Ausschnitts eines Geldautomaten 10 mit einer Vorrichtung 400 zum Verhindern des Ausspähens von auf dem Magnetstreifen 14 einer Magnetstreifen- und/oder Chipkarte 12 gespeicherten Daten gemäß einer dritten Ausführungsform dargestellt. Bei dieser dritten Ausführungsform sind die Induktivitäten 104, 106 als zwei Spulen mit jeweils einem Ferritkern 108, 110 ausgebildet, die an gegenüberliegenden Seiten des Schlitzes 116 zum Einführen der Magnetstreifen- und/oder Chipkarte in den Geldautomaten 10 angeordnet sind. Die durch die beiden Induktivitäten 104, 106 erzeugten Störfelder sind durch die mit den Bezugszeichen 112 bzw. 114 gekennzeichneten Feldlinien symbolisch angedeutet.

Die Induktivitäten 104, 106 sind derart angeordnet, dass bei einer gleichphasigen Beaufschlagung der beiden Induktivitäten 104, 106 mit einem elektrischen Strom sich die beiden Störfelder in dem Bereich zwischen den Induktivitäten 104, 106, also in dem Bereich des Schlitzes 116, derart überlagern, dass sich ein resultierendes Störfeld mit einer besonders großen Feldstärke ergibt, wie dies durch die eng beieinanderliegenden Feldlinien 112, 114 symbolisiert ist. Somit wird ein in diesem Bereich angeordnetes Skimming-Modul durch die beiden Induktivitäten 104, 106 gestört.

Die von den beiden Induktivitäten 104, 106 erzeugten Störfelder schwächen sich jedoch in dem Bereich außerhalb des Zwischenbereichs, also im Fernbereich, gegenseitig ab, sodass sich ein resultierendes Störfeld mit einer besonders geringen Feldstärke ergibt.

Bei einer alternativen Ausführungsform der Erfindung können auch mehr als zwei Induktivitäten 104, 106, beispielsweise drei Induktivitäten 104, 106, vorgesehen sein.

### Bezugszeichenliste

- 10: Geldautomat
- 12: Magnetstreifen- und/oder Chipkarte
- 14: Magnetstreifen
- 16, 116: Schlitz
- 18: Anzeigeeinheit
- 20: Tastatur
- 22: Ausgabefach
- 100, 300, 400: Anti-Skimming-Modul
- 102: Gehäuse
- 104, 106: Spule
- 108, 110: Ferrit-Kern
- 112, 114: Feldlinien
- 200, 202, 204: Linie
- A, B: Position
- AS: Abstand
- SP: Störpegel

## Patentansprüche

1. Vorrichtung zum Verhindern des Ausspähens von auf einem Magnetstreifen einer Magnetstreifen- und/oder Chipkarte gespeicherten Daten,
mit einer zum Erzeugen eines elektromagnetischen ersten Störfeldes mit einem ersten elektrischen Strom beaufschlagten ersten Induktivität (104),
mit einer zum Erzeugen eines elektromagnetischen zweiten Störfeldes mit einem zweiten elektrischen Strom beaufschlagten zweiten Induktivität (106),
**dadurch gekennzeichnet, dass**
die Induktivitäten (104, 106) derart angeordnet und mit dem jeweiligen Strom beaufschlagt und gleichphasig angesteuert sind, dass sich das erste Störfeld und das zweite Störfeld zwischen den beiden Induktivitäten (104,106) gleichphasig und außerhalb gegenphasig überlagern, sodass das aus dem ersten Störfeld und dem zweiten Störfeld resultierende Störfeld in einem Zwischenbereich zwischen den beiden Induktivitäten (104, 106) eine größere Feldstärke als das erste Störfeld alleine und eine größere Feldstärke als das zweite Störfeld alleine hat und dass das resultierende Störfeld außerhalb des Zwischenbereichs eine geringere Feldstärke als das erste Störfeld alleine und das zweite Störfeld alleine hat.

2. Vorrichtung (100, 300, 400) nach Anspruch 1, **dadurch gekennzeichnet, dass** die erste Induktivität (104) und die zweite Induktivität (106) derart ausgebildet sind, dass das die elektromagnetischen Wellen des ersten Störfeldes und die elektromagnetischen Wellen des zweiten Störfeldes die gleiche Amplitude und/oder Frequenz haben.

3. Vorrichtung (100, 300, 400) nach einem der vorhergehenden Ansprüche, **dadurch gekennzeichnet, dass** die erste Induktivität (104) und die zweite Induktivität (106) baugleich sind.

4. Vorrichtung (100, 300, 400) nach einem der vorhergehenden Ansprüche, **dadurch gekennzeichnet, dass** die erste Induktivität (104) eine erste Spule und/oder die zweite Induktivität (106) eine zweite Spule umfasst.

5. Vorrichtung (100, 300, 400) nach Anspruch 4, **dadurch gekennzeichnet, dass** die erste Spule und die zweite Spule baugleich sind.

6. Vorrichtung (100, 300, 400) nach einem der vorhergehenden Ansprüche, **dadurch gekennzeichnet, dass** die erste Induktivität (104) und die zweite Induktivität (106) in einem Abstand zwischen 1 cm und 4 cm, vorzugsweise zwischen 2 cm und 3cm, zueinander angeordnet sind.

7. Vorrichtung (100, 300, 400) nach einem der Ansprüche 1 bis 2, **dadurch gekennzeichnet, dass** die Vorrichtung (100, 300, 400) einen Schlitz (116) zum Durchführen der Magnetstreifen- und/oder Chipkarte (12) aufweist, dass die erste Spule um diesen Schlitz (116) herumgewickelt angeordnet ist, und dass die zweite Spule punktuell benachbart zum Schlitz (116) angeordnet ist.

8. Vorrichtung (100, 300, 400) nach Anspruch 7, **dadurch gekennzeichnet, dass** die erste Spule als gedruckte Schaltung ausgebildet ist.

9. Vorrichtung (100, 300, 400) nach einem der vorhergehenden Ansprüche, **dadurch gekennzeichnet, dass** der erste Strom und der zweite Strom die gleiche Stromstärke haben.

10. Vorrichtung (100, 300, 400) nach einem der vorhergehenden Ansprüche, **dadurch gekennzeichnet, dass** mindestens eine zum Erzeugen eines elektromagnetischen dritten Störfeldes mit einem dritten elektrischen Strom beaufschlagte dritte Induktivität vorgesehen ist, und dass die Induktivitäten (104, 106) derart angeordnet sind, dass sich die Störfelder in einem Störbereich zum Stören des Ausspähens der Daten verstärken und auβerhalb des Störbereichs abschwächen.

11. Vorrichtung (10) zur Handhabung von Wertscheinen,
mit einer Kartenleseeinheit zum Lesen einer Magnetstreifen und/oder Chipkarte (12),
einem Schlitz (16) zum Zuführen der Magnetstreifen- und/oder Chipkarte (12) zu der Kartenleseeinheit,
und mit einer Vorrichtung (100, 300, 400) zum Verhindern des Ausspähens von auf dem Magnetstreifen (14) der Magnetstreifen- und/oder Chipkarte (12) gespeicherten Daten nach einem der Ansprüche 1 bis 10.

## Claims

1. Device for preventing spying of data stored on a magnetic strip of a magnetic-strip and/or chip card,
with a first inductor (104), which is exposed to a first electric current to generate a first electromagnetic interference field,
with a second inductor (106), which is exposed to a second electric current to generate a second electromagnetic interference field,
**characterized in that**
the inductors (104, 106) are arranged and exposed to the respective current and driven in phase in such a way that the first interference field and the second interference field are superimposed in phase between the two inductors (104, 106) and in phase opposition outside the inductors, so that the interference field resulting from the first interference field and the second interference field in an intermediate region between the two inductors (104, 106) has a greater field strength than the first interference field alone and a greater field strength than the second interference field alone, and **in that** the resultant interference field outside the intermediate region has a lower field strength than the first interference field alone and the second interference field alone.

2. Device (100, 300, 400) according to Claim 1, **characterized in that** the first inductor (104) and the second inductor (106) are formed in such a way that the electromagnetic waves of the first interference field and the electromagnetic waves of the second interference field have the same amplitude and/or frequency.

3. Device (100, 300, 400) according to one of the preceding claims, **characterized in that** the first inductor (104) and the second inductor (106) are structurally identical.

4. Device (100, 300, 400) according to one of the preceding claims, **characterized in that** the first inductor (14) comprises a first coil and/or the second inductor (106) comprises a second coil.

5. Device (100, 300, 400) according to one of the preceding claims, **characterized in that** the first coil and the second coil are structurally identical.

6. Device (100, 300, 400) according to one of the preceding claims, **characterized in that** the first inductor (104) and the second inductor (106) are arranged at a distance of between 1 cm and 4 cm, preferably between 2 cm and 3 cm, from one another.

7. Device (100, 300, 400) according to either of Claims 1 and 2, **characterized in that** the device (100, 300, 400) has a slot (116) for passing through the magnetic-strip and/or chip card (12), **in that** the first coil is arranged wrapped around the slot (116), and **in that** the second coil is arranged in the form of a point alongside the slot (116) .

8. Device (100, 300, 400) according to Claim 7, **characterized in that** the first coil is formed as a printed circuit.

9. Device (100, 300, 400) according to one of the preceding claims, **characterized in that** the first current and the second current have the same current intensity.

10. Device (100, 300, 400) according to one of the preceding claims, **characterized in that** at least a third inductor, which is exposed to a third electric current for generating a third electromagnetic interference field, is provided, and **in that** the inductors (104, 106) are arranged in such a way that the interference fields are intensified in an interference area for interfering with spying of the data and are attenuated outside the interference area.

11. Device (10) for handling notes of value,
with a card reading unit for reading a magnetic-strip and/or chip card (12),
a slot (16) for feeding the magnetic-strip and/or chip card (12) to the card reading unit,
and with a device (100, 300, 400) for preventing the spying of data stored on the magnetic strip (14) of the magnetic-strip and/or chip card (12) according to one of Claims 1 to 10.

## Revendications

1. Dispositif destiné à empêcher l'espionnage de données stockées sur une piste magnétique d'une carte à piste magnétique et/ou à puce,
comportant une première inductance (104) à laquelle est appliqué un premier courant électrique pour générer un premier champ électromagnétique perturbateur, comportant une deuxième inductance (106) à laquelle est appliqué un deuxième courant électrique pour générer un deuxième champ électromagnétique perturbateur,
**caractérisé en ce que** les inductances (104, 106) sont disposées, sont alimentées avec le courant respectif et sont commandées en phase, **en ce que** le premier champ perturbateur et le deuxième champ perturbateur soient superposés en phase entre les deux inductances (104, 106) et en opposition de phase à l'extérieur de celles-ci, de manière à ce que le champ perturbateur résultant du premier champ perturbateur et du deuxième champ perturbateur présente, dans une zone intermédiaire entre les deux inductances (104, 106), une intensité de champ supérieure à celle du premier champ perturbateur seul et une intensité de champ supérieure à celle du deuxième champ perturbateur seul et **en ce que** le champ perturbateur résultant à l'extérieur de la zone intermédiaire présente une intensité de champ inférieure à celle du premier champ perturbateur seul et à celle du deuxième champ perturbateur seul.

2. Dispositif (100, 300, 400) selon la revendication 1, **caractérisé en ce que** la première inductance (104) et la deuxième inductance (106) sont conçues de manière à ce que les ondes électromagnétiques du premier champ perturbateur et les ondes électromagnétiques du deuxième champ perturbateur présentent la même amplitude et/ou la même fréquence.

3. Dispositif (100, 300, 400) selon l'une quelconque des revendications précédentes, **caractérisé en ce que** la première inductance (104) et la deuxième inductance (106) présentent la même structure.

4. Dispositif (100, 300, 400) selon l'une quelconque des revendications précédentes, **caractérisé en ce que** la première inductance (104) comprend une première bobine et/ou **en ce que** la deuxième inductance (106) comprend une deuxième bobine.

5. Dispositif (100, 300, 400) selon la revendication 4, **caractérisé en ce que** la première bobine et la deuxième bobine présentent la même structure.

6. Dispositif (100, 300, 400) selon l'une quelconque des revendications précédentes, **caractérisé en ce que** la première inductance (104) et la deuxième inductance (106) sont disposées à une distance l'une de l'autre comprise entre 1 cm et 4 cm et de préférence, entre 2 cm et 3 cm.

7. Dispositif (100, 300, 400) selon l'une quelconque des revendications 1 à 2, **caractérisé en ce que** le dispositif (100, 300, 400) présente une fente (116) destinée à l'insertion de la carte à piste magnétique et/ou à puce (12), **en ce que** la première bobine est disposée de manière enroulée autour de ladite fente (116), et **en ce que** la deuxième bobine est disposée de manière ponctuellement adjacente à la fente (116) .

8. Dispositif (100, 300, 400) selon la revendication 7, **caractérisé en ce que** la première bobine est réalisée sous la forme d'un circuit imprimé.

9. Dispositif (100, 300, 400) selon l'une quelconque des revendications précédentes, **caractérisé en ce que** le premier courant et le deuxième courant présentent la même intensité.

10. Dispositif (100, 300, 400) selon l'une quelconque des revendications précédentes, **caractérisé en ce qu'**il est prévu au moins une troisième inductance à laquelle est appliqué un troisième courant électrique pour générer un troisième champ électromagnétique perturbateur et **en ce que** les inductances (104, 106) sont disposées de manière à ce que les champs perturbateurs se renforcent dans une région de perturbation pour perturber l'espionnage des données et s'atténuent à l'extérieur de la région de perturbation.

11. Dispositif (10) destiné à manipuler des billets de banque,
comportant une unité de lecture de carte destinée à lire une carte à piste magnétique et/ou à puce (12), une fente (16) destinée à introduire la carte à piste magnétique et/ou à puce (12) vers l'unité de lecture de carte,
et comportant un dispositif (100, 300, 400) destiné à empêcher l'espionnage de données stockées sur la piste magnétique (14) de la carte à piste magnétique et/ou à puce (12) selon l'une quelconque des revendications 1 à 10.
